# EUROPEAN PATENT APPLICATION

(11) **EP 3 771 669 A1**
(43) Date of publication of application: **03.02.2021**
(21) Application number: 20188615.7
(22) Date of filing: 30.07.2020
(51) Int. Cl.: B65H 9/00, B65H 7/06

(54) **CONVEYOR DEVICE**

(30) Priority: 31.07.2019 JP 2019141219
(71) Applicant: KYOCERA Document Solutions Inc., Osaka-shi, Osaka 540-8585 (JP)
(72) Inventor: TAKATSUKI, Yasushi, Osaka, 540-8585 (JP); SHIRAI, Wataru, Osaka, 540-8585 (JP)
(74) Representative: Viering, Jentschura & Partner mbB Patent- und Rechtsanwälte

(57) **Abstract**

A conveyor device (100) includes a conveyance section (134), a detector (220), and a controller (150). The conveyance section includes a registration roller (208). The conveyance section conveys a sheet (P, R). The detector detects a physical quantity (PA) associated with a skew in the sheet. The controller controls the conveyance section. The controller determines, based on a result of detection by the detector, whether or not rotation of the registration roller is to be stopped to perform an operation to correct the skew in the sheet.

## Description

### BACKGROUND

The present disclosure relates to a conveyor device.

A known conveyor device (feeder) includes a separation feeding means and a pair of registration rollers. The separation feeding means separates and feeds printing paper loaded on a paper feed tray. The pair of registration rollers is located downstream of the separation feeding means in a printing paper conveyance direction and corrects a skew in the printing paper. The pair of registration rollers then feeds the printing paper fed by the separation feeding means toward a printing section.

Specifically, after the printing paper is warped by the separation feeding means feeding the printing paper in a state where the leading edge of the printing paper is in contact with the registration rollers, the feeding speed of the separation feeding means is set to be slower than the feeding speed of the pair of registration rollers in feeding the printing paper to the registration rollers, and the warp is gradually reduced.

### SUMMARY

A conveyor device according to an aspect of the present disclosure includes a conveyance section, a detector, and a controller. The conveyance section includes a registration roller. The conveyance section conveys a sheet. The detector detects a physical quantity associated with a skew in the sheet. The controller controls the conveyance section. The controller determines, based on a result of detection by the detector, whether or not rotation of the registration roller is to be stopped to perform an operation to correct the skew in the sheet.

### BRIEF DESCRIPTION OF THE DRAWINGS

FIG. 1 is a schematic cross-sectional view of an image forming apparatus according to a first embodiment of the present disclosure.
FIG. 2 is a schematic cross-sectional view of a conveyance unit according to the first embodiment.
FIG. 3 is a plan view of a first detector according to the first embodiment.
FIG. 4 is a block diagram illustrating the image forming apparatus according to the first embodiment.
FIG. 5 is a flowchart depicting one part of a sheet conveyance process performed by the image forming apparatus according to the first embodiment.
FIG. 6 is a flowchart depicting the other part of the sheet conveyance process performed by the image forming apparatus according to the first embodiment.
FIG. 7 is a flowchart depicting one part of a sheet conveyance process performed by the image forming apparatus according to a second embodiment of the present disclosure.
FIG. 8 is a flowchart depicting the other part of the sheet conveyance process performed by the image forming apparatus according to the second embodiment.

### DETAILED DESCRIPTION

The following describes embodiments of the present disclosure with reference to the accompanying drawings. Elements in the drawings that are the same or equivalent are labeled with the same reference signs in the drawings and description thereof is not repeated.

### (First Embodiment)

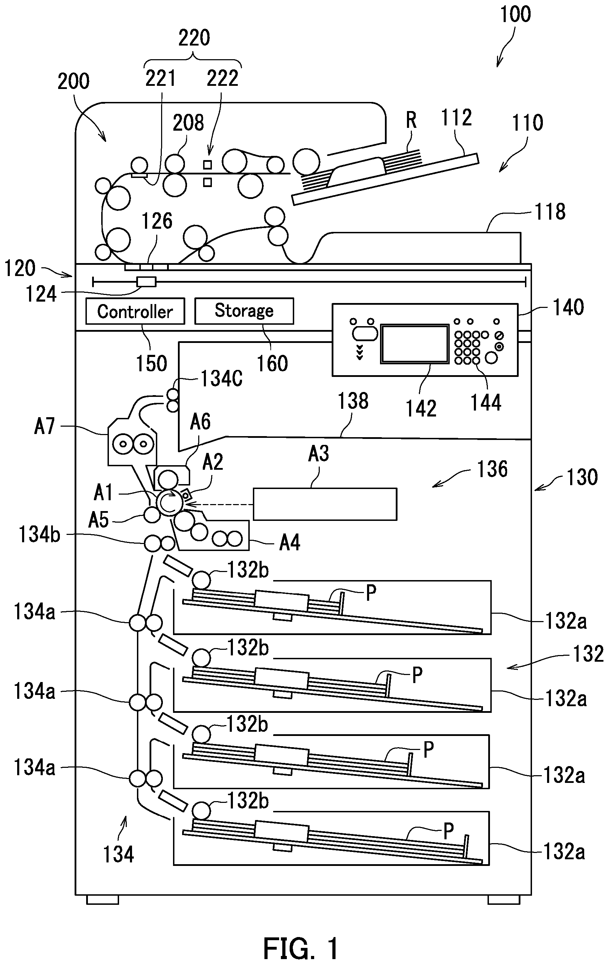

A configuration of an image forming apparatus 100 according to a first embodiment of the present disclosure is described with reference to FIGS. 1 to 6.

FIG. 1 is a schematic cross-sectional view of the image forming apparatus 100 according to the first embodiment. The image forming apparatus 100 forms an image on a recording medium P. In the first embodiment, the image forming apparatus 100 is an electrographic multifunction peripheral. A multifunction peripheral includes a plurality of functions such as a copy function, a print function, a scan function, and a facsimile function. The image forming apparatus 100 corresponds to an example of a "conveyor device".

As illustrated in FIG. 1, the image forming apparatus 100 conveys a sheet R or the recording medium P. Specifically, the image forming apparatus 100 includes a conveyance unit 110, a reading unit 120, an image formation unit 130, an input and output unit 140, a controller 150, and storage 160.

The conveyance unit 110 conveys the sheet R. In the first embodiment, the conveyance unit 110 is an automatic document feeder (ADF). Accordingly, the sheet R is a document in the first embodiment. The sheet R is thin and rectangular. Examples of the sheet R include plain paper, recycled paper, thin paper, thick paper, copy paper, and an overhead projector (OHP) sheet.

The reading unit 120 reads an image (an image read by the reading unit 120 may be referred to in the following as a "read image") from the sheet R conveyed by the conveyance unit 110 and generates image data indicating the read image.

Specifically, the reading unit 120 includes a reading sensor 124 and contact glass 126. The reading unit 120 also includes an optical component such as a light-emitting diode (LED) as a light source and an imaging lens.

The reading sensor 124 reads an image on an obverse surface of the sheet R through the contact glass 126 disposed at a reading position of the sheet R and generates image data indicating the image on the obverse surface. The reading sensor 124 is a contact image sensor (CIS) scanner or a charge-coupled device (CCD) scanner.

The image formation unit 130 forms an image on the recording medium P. The image formation unit 130, for example, forms an image on the recording medium P based on image data received from an external device or image data generated by the reading unit 120. The recording medium P is thin and rectangular. Examples of the recording medium P include plain paper, recycled paper, thin paper, thick paper, copy paper, and an OHP sheet.

Specifically, the image formation unit 130 includes a feeding unit 132, a conveyance section 134, an image forming section 136, and an ejection section 138.

The feeding unit 132 houses multiple sheets of the recording medium P and feeds the recording medium P to the conveyance section 134 a sheet at a time.

Specifically, the feeding unit 132 includes a tray 132a and a feeding roller 132b. The tray 132a houses multiple sheets of the recording medium P. The feeding roller 132b feeds the recording medium P housed in the tray 132a to the conveyance section 134 a sheet at a time.

The conveyance section 134 conveys the recording medium P to the ejection section 138 along a conveyance path via the image forming section 136.

Specifically, the conveyance section 134 includes a plurality of conveyance rollers 134a, a registration roller 134b, and an ejection roller 134c. The conveyance rollers 134a convey the recording medium P. Each of the conveyance rollers 134a includes a pair of rollers. The registration roller 134b adjusts the conveyance timing of the recording medium P to the image forming section 136. The registration roller 134b also temporarily stops advancement of the recording medium P in the conveyance direction and warps the recording medium P to correct a skew in the recording medium P. The registration roller 134b includes a pair of rollers. The ejection roller 134c ejects the recording medium P with an image formed thereon by the image forming section 136 toward the ejection section 138. The ejection roller 134c includes a pair of rollers.

The ejection section 138 receives the recording medium P conveyed by the conveyance section 134 and carries the recording medium P thereon.

The image forming section 136 forms an image on the recording medium P with toner. Specifically, the image forming section 136 includes a photosensitive drum A1, a charger A2, a light exposure device A3, a development device A4, a transfer device A5, a cleaner A6, and a fixing device A7.

The charger A2 charges the photosensitive drum A1 to a prescribed potential. The light exposure device A3 forms an electrostatic latent image on the photosensitive drum A1 according to image data by outputting laser light based on the image data and irradiating the photosensitive drum A1. The development device A4 supplies toner to the electrostatic latent image on the photosensitive drum A1 to develop the electrostatic latent image, thus forming a toner image on the photosensitive drum A1. The transfer device A5 transfers the toner image from the photosensitive drum A1 to the recording medium P. The cleaner A6 removes remaining toner from the photosensitive drum A1 after transfer. The fixing device A7 applies heat and pressure to the toner image, thus fixing an image to the recording medium P.

The input and output unit 140 displays information on a display screen and receives operation by the user.

Specifically, the input and output unit 140 includes a display section 142 and an operation section 144. The display section 142 displays various information. The display section 142 is a liquid-crystal display, for example. The operation section 144 includes a start button, arrow keys, and a numeric keypad. The operation section 144 may include a touch panel. In this case, the touch panel is disposed on a display surface of the display section 142.

The controller 150 controls each element of the image forming apparatus 100. The controller 150 includes a processor such as a central processing unit (CPU).

The storage 160 includes a storage device and stores data and computer programs therein. Specifically, the storage 160 includes a main storage device such as semiconductor memory and an auxiliary storage device such as one or more of semiconductor memory, a solid-state drive, and a hard disk drive. The storage 160 may include removable media.

The processor of the controller 150 controls each element of the image forming apparatus 100 by executing a computer program stored in the storage device of the storage 160.

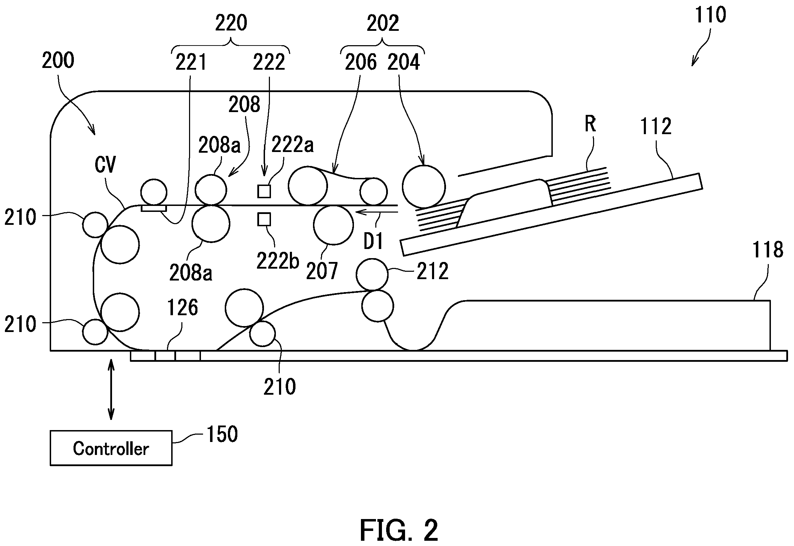

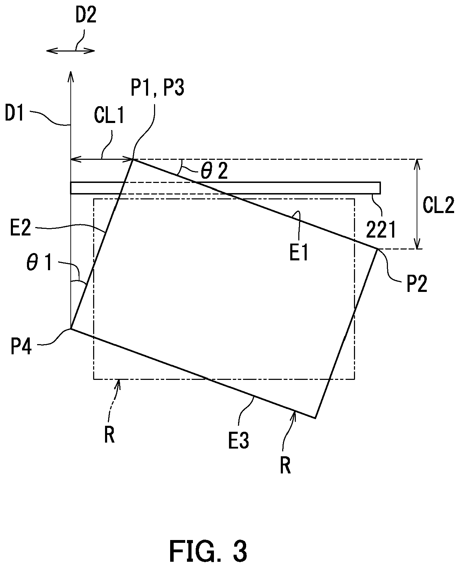

Next, the conveyance unit 110 is described with reference to FIGS. 2 and 3. FIG. 2 is a schematic cross-sectional view of the conveyance unit 110.

As illustrated in FIG. 2, the conveyance unit 110 includes a table 112, an ejection section 118, a conveyance section 200, and a detector 220.

The sheet R is loaded on the table 112. The conveyance section 200 conveys the sheet R loaded on the table 112 to the ejection section 118 via the contact glass 126 along a sheet conveyance path CV. The ejection section 118 receives the sheet R conveyed by the conveyance section 200 and carries the sheet R thereon.

The conveyance section 200 includes a feeding section 202, a separation roller 207, a registration roller 208, a plurality of conveyance rollers 210, and an ejection roller 212.

Through rotation, the feeding section 202 picks up sheets R loaded on the table 112 a sheet at a time and supplies the sheets R to the sheet conveyance path CV by advancing the sheets R in a sheet conveyance direction D1. In the first embodiment, the feeding section 202 feeds the sheets R toward the registration roller 208 through rotation.

Specifically, the feeding section 202 includes a pickup roller 204 and a feeding rotating body 206.

Through rotational operation, the pickup roller 204 picks up the sheets R loaded on the table 112 a sheet at a time and passes the sheets R to the feeding rotating body 206. The feeding rotating body 206 is disposed downstream of the pickup roller 204 in the sheet conveyance direction D1. Through rotational operation, the feeding rotating body 206 feeds the sheets R to the sheet conveyance path CV. In the first embodiment, the feeding rotating body 206 feeds the sheets R toward the registration roller 208 through rotational operation. The feeding rotating body 206 is a belt in the first embodiment. The belt is stretched between a drive roller and a driven roller and circulates due to rotation of the drive roller. Note that the feeding rotating body 206 may be a roller.

The separation roller 207 is disposed opposite to the feeding rotating body 206 and is in contact with the feeding rotating body 206. The separation roller 207 rotates such that one or more sheets R advance in a direction opposite to the sheet conveyance direction D1 when the feeding section 202 performs feeding of the sheets R. Accordingly, even in a case where multiple sheets R are stacked together and fed to the sheet conveyance path CV, the stacked and fed sheets R can be separated sheet by sheet by the separation roller 207. As a result, a sheet R which should not be conveyed among the stacked and fed sheets R advances in the direction opposite to the sheet conveyance direction D1.

The registration roller 208 is disposed downstream of the feeding section 202 in the sheet conveyance direction D1. The registration roller 208 conveys a sheet R fed by the feeding section 202 in the sheet conveyance direction D1. Only when the controller 150 determines that an operation to correct a skew in the sheet R is to be performed, the registration roller 208 temporarily stops the sheet R fed to the sheet conveyance path CV from advancing in the sheet conveyance direction D1 and warps the sheet R to correct the skew in the sheet R. Specifically, when the registration roller 208 stops rotating, the leading edge of the sheet R in the sheet conveyance direction D1 makes contact with the registration roller 208 and the registration roller 208 corrects the skew in the sheet R by warping the sheet R. The registration roller 208 includes a pair of rollers 208a. When the controller 150 determines that an operation to correct a skew in the sheet R is to be performed, the leading edge of the sheet R in the sheet conveyance direction D1 makes contact with a nip between the pair of stopped rollers 208a and the skew in the sheet R is corrected by warping the sheet R.

In the following, an operation in which the rotation of the registration roller 208 is stopped to warp the sheet R may be referred to as a "skew correction operation".

The conveyance rollers 210 are disposed downstream of the registration roller 208 in the sheet conveyance direction D1. The conveyance rollers 210 are disposed along the sheet conveyance path CV. The conveyance rollers 210 convey the sheet R conveyed by the registration roller 208 to the ejection roller 212 via the contact glass 126 along the sheet conveyance path CV. Each of the conveyance rollers 210 includes a pair of rollers.

The ejection roller 212 is disposed farthest downstream in the sheet conveyance direction D1. The ejection roller 212 ejects the sheet R conveyed by the conveyance rollers 210 toward the ejection section 118. The ejection roller 212 includes a pair of rollers.

The detector 220 is disposed on the sheet conveyance path CV. The detector 220 detects a physical quantity (referred to in the following as a "physical quantity PA") associated with a skew in the sheet R. The controller 150 then determines whether or not the rotation of the registration roller 208 is to be stopped to perform an operation to correct a skew in the sheet R based on a result of detection by the detector 220.

Therefore, according to the first embodiment, the controller 150 can cause the registration roller 208 to perform the skew correction operation only when the controller 150 determines that an operation to correct the skew in the sheet R is to be performed. As a result, the image forming apparatus 100 can shorten the time between the start of feeding and the ejection of the sheet R while correcting the skew in the sheet R.

Specifically, the controller 150 determines whether or not the sheet R is skewed based on the result of detection by the detector 220 (specifically, the physical quantity PA associated with the skew in the sheet R).

The controller 150 determines that an operation to correct a skew in the sheet R is not to be performed when the sheet R is determined not to be skewed. When the controller 150 determines that an operation to correct a skew in the sheet R is not to be performed, the controller 150 does not perform the skew correction operation with the registration roller 208. As a result, the time between the start of feeding and the ejection of the sheet R can be reduced compared to a case in which the skew correction operation is consistently performed by a registration roller regardless of whether or not the sheet R is skewed.

When determining that the sheet R is skewed by contrast, the controller 150 determines that an operation to correct the skew in the sheet R is to be performed. When the controller 150 determines that an operation to correct the skew in the sheet R is to be performed, the controller 150 causes the registration roller 208 to perform the skew correction operation. As a result, the skew in the sheet R can be corrected when the sheet R is skewed.

In the first embodiment, the controller 150 determines whether or not the skew correction operation is to be performed by the registration roller 208 based on the physical quantity PA associated with a skew in the first sheet R to be fed. Accordingly, when the controller 150 determines that an operation to correct a skew in the first sheet R is to be performed, the registration roller 208 performs the skew correction operation on the sheets R from the second and following sheets R.

Also according to the first embodiment, the controller 150 can perform the skew correction operation with the registration roller 208 only when the controller 150 determines that an operation to correct a skew in the sheet R is to be performed. Thus, the frequency of occurrence of noise when the sheet R makes contact with the stopped registration roller 208 can be reduced.

Particularly, in the first embodiment, the physical quantity PA associated with a skew in the sheet R includes a first physical quantity (referred to in the following as a "first physical quantity PA1"). The first physical quantity PA1 is an amount indicating a slant of the sheet R with respect to the sheet conveyance direction D1. Therefore, the detector 220 includes a first detector 221. In the first embodiment, the first detector 221 is disposed on the sheet conveyance path CV, downstream of the registration roller 208 in the sheet conveyance direction D1. Note that the first detector 221 may be disposed on the sheet conveyance path CV, upstream of the registration roller 208 in the sheet conveyance direction D1 and downstream of the feeding section 202 in the sheet conveyance direction D1.

The first detector 221 detects the first physical quantity PA1 indicating a slant of the sheet R and outputs a signal expressing the first physical quantity PA1 to the controller 150.

The controller 150 then determines whether or not the rotation of the registration roller 208 is to be stopped to perform an operation to correct a skew in the sheet R based on the first physical quantity PA1 indicating a slant of the sheet R. That is, the controller 150 determines whether or not the rotation of the registration roller 208 is to be stopped to perform an operation to correct a skew in the sheet R based on a result of detection by the first detector 221. Therefore, according to the first embodiment, the controller 150 can accurately determine whether or not the sheet R is skewed based on the result of detection by the first detector 221. Thus, the controller 150 can more appropriately determine whether or not the skew correction operation is to be performed by the registration roller 208.

Specifically, the first detector 221 is an image sensor which captures an image of the sheet R. Accordingly, the first detector 221 captures an image of the sheet R and outputs image data indicating the image of the sheet R to the controller 150. As a result, according to the first embodiment, the controller 150 can determine whether or not the sheet R is skewed with even higher accuracy by analyzing the image of the sheet R included in the image data. The image data output by the first detector 221 is a signal expressing the first physical quantity PA1.

FIG. 3 is a plan view of the first detector 221. As illustrated in FIG. 3, the first detector 221 is preferably a line sensor. A line sensor is an image sensor which includes a plurality of photoelectric conversion elements arranged in one direction.

Accordingly, the first detector 221 extends in a prescribed direction D2. The prescribed direction D2 is substantially orthogonal to the sheet conveyance direction D1 and substantially parallel to the sheet conveyance path CV (FIG. 1). The first detector 221 includes a plurality of photoelectric conversion elements arranged in the prescribed direction D2. In the first embodiment, the first detector 221 is a contact image sensor (CIS).

Here, the first physical quantity PA1 indicating a slant of the sheet R with respect to the sheet conveyance direction D1 is not particularly limited as long as the first physical quantity PA1 does represent a slant of the sheet R, and is for example an angle θ1, an angle θ2, a difference CL1, or a difference CL2. The angle θ1 is a tilt angle of the sheet R with respect to the sheet conveyance direction D1. The angle θ2 is a tilt angle of the sheet R with respect to the prescribed direction D2. The difference CL1 is a difference in the prescribed direction D2 between one end point P3 and another end point P4 of a side edge E2 of the sheet R. The difference CL2 is a difference in the sheet conveyance direction D1 between one end point P1 and another end point P2 of a leading edge E1 of the sheet R. The leading edge E1 of the sheet R in the sheet conveyance direction D1 is opposite to a trailing edge E3 of the sheet R in the sheet conveyance direction D1. Note that in FIG. 3, a non-skewed sheet R is indicated by a dashed and double dotted line for comparison.

In particular, in the first embodiment, the first detector 221 is preferably an image sensor which captures an image formed on the sheet R. In this preferable example, the first detector 221, which is a sensor for detecting a skew in the sheet R, is used for reading an image formed on the sheet R. As a result, the cost of the image forming apparatus 100 can be reduced and the size of the image forming apparatus 100 can be prevented from increasing more than in a case where a sensor dedicated only to detecting a skew in the sheet R is provided.

Specifically, the first detector 221 captures an image formed on the sheet R conveyed in the sheet conveyance path CV to generate image data including the image formed on the sheet R, and outputs the image data to the controller 150. In the first embodiment, the first detector 221 captures an image on the reverse side of the sheet R conveyed in the sheet conveyance path CV to generate image data including the image of the reverse side, and outputs the image data to the controller 150.

Returning to FIG. 2, the physical quantity PA detected by the detector 220, that is, the physical quantity PA associated with a skew in the sheet R, may include a second physical quantity (referred to in the following as a "second physical quantity PA2"). The second physical quantity PA2 is a quantity indicating the thickness of the sheet R. For example, as the thickness of the sheet R decreases, the sheet R is more likely to be skewed.

Specifically, the detector 220 includes a second detector 222. In the first embodiment, the second detector 222 is disposed upstream of the registration roller 208 in the sheet conveyance direction D1 and downstream of the feeding section 202 in the sheet conveyance direction D1. That is, the second detector 222 is disposed between the registration roller 208 and the feeding section 202 on the sheet conveyance path CV.

The second detector 222 detects the second physical quantity PA2 indicating the thickness of the sheet R and outputs a signal representing the second physical quantity PA2 to the controller 150.

When determining that an operation to correct a skew in the sheet R is to be performed, the controller 150 preferably determines, based on the second physical quantity PA2 indicating the thickness of the sheet R, a control quantity (referred to in the following as a "control quantity DF") for controlling an amount of warp in the sheet R when the leading edge of the sheet R in the sheet conveyance direction D1 makes contact with the stopped registration roller 208. That is, when determining that an operation to correct a skew in the sheet R is to be performed, the controller 150 preferably determines, based on the result of detection by the second detector 222, the control quantity DF for controlling the amount of warp in the sheet R when the leading edge of the sheet R in the sheet conveyance direction D1 makes contact with the stopped registration roller 208.

Therefore, according to the preferable example, the controller 150 can appropriately determine the amount of warp in the sheet R according to the thickness of the sheet R when the leading edge of the sheet R makes contact with the stopped registration roller 208. As a result, occurrence of noise caused by contact and deformation of the sheet R during skew correction can be reduced.

For example, when the second physical quantity PA2 indicates that the thickness of the sheet R is within a range of a thickness corresponding to plain paper, the controller 150 determines the control quantity DF such that the amount of warp is a first warp value DF1. The range of the thickness corresponding to plain paper is for example a range of thickness equivalent to a basis weight of at least 65 (g/m²) and less than 100 (g/m²).

For example, when the second physical quantity PA2 indicates that the thickness of the sheet R is within a range of a thickness corresponding to thin paper, the controller 150 determines the control quantity DF such that the amount of warp is a second warp value DF2. The second warp value DF2 is greater than the first warp value DF1. Accordingly, the control quantity DF when the warping amount is the second warp value DF2 is greater than the control quantity DF when the amount of warp is the first warp value DF1. The range of the thickness corresponding to thin paper is for example a range of thickness equivalent to a basis weight of at least 50 (g/m²) and less than 65 (g/m²).

For example, when the second physical quantity PA2 indicates that the thickness of the sheet R is within a range of a thickness corresponding to thick paper, the controller 150 determines the control quantity DF such that the amount of warp is a third warp value DF3. The third warp value DF3 is smaller than the first warp value DF1. This is because in the case of thick paper, the "sag" of thick paper can be used to correct a skew. Accordingly, the control quantity DF when the amount of warp is the third warp value DF3 is smaller than the control quantity DF when the amount of warp is the first warp value DF1. The range of the thickness corresponding to thick paper is for example a range of thickness equivalent to a basis weight of at least 100 (g/m²).

In particular, in the first embodiment, the second detector 222 is preferably a multiple sheet feed sensor which detects feeding of multiple sheets R. According to this preferable example, the second detector 222, which is a sensor for detecting the thickness of the sheet R, is used for detecting feeding of multiple sheets R. As a result, the cost of the image forming apparatus 100 can be reduced and the size of the image forming apparatus 100 can be prevented from increasing more than in a case where a sensor dedicated only to detecting the thickness of the sheet R is provided. "Feeding of multiple sheets R" means that multiple sheets R are fed while stacked together.

Specifically, the second detector 222 includes an ultrasonic wave transmitter 222a and an ultrasonic wave receiver 222b. The ultrasonic wave transmitter 222a and the ultrasonic wave receiver 222b are opposite to each other across the sheet conveyance path CV. The ultrasonic wave transmitter 222a emits ultrasonic waves toward the ultrasonic wave receiver 222b. The ultrasonic wave receiver 222b receives the ultrasonic waves emitted by the ultrasonic wave transmitter 222a and outputs a signal representing the strength of the received ultrasonic waves to the controller 150. The strength of the received ultrasonic waves corresponds to the second physical quantity PA2 indicating the thickness of the sheet R.

When the sheet R is positioned between the ultrasonic wave transmitter 222a and the ultrasonic wave receiver 222b, the ultrasonic wave receiver 222b receives ultrasonic waves that have passed through the sheet R. Accordingly, when the sheet R is positioned between the ultrasonic wave transmitter 222a and the ultrasonic wave receiver 222b, the strength of the ultrasonic waves received by the ultrasonic wave receiver 222b attenuates according to the thickness of the sheet R or the number of sheets R stacked together.

For example, when the strength of the ultrasonic waves received by the ultrasonic wave receiver 222b is at least a first level LV1, the controller 150 determines the thickness of the sheet R to be within a range of thickness equivalent to thin paper. In this case, the controller 150 determines the control quantity DF such that the amount of warp is the second warp value DF2.

For example, when the strength of the ultrasonic waves received by the ultrasonic wave receiver 222b is at least a second level LV2 and less than the first level LV1, the controller 150 determines the thickness of the sheet R to be within a range of thickness equivalent to plain paper. The second level LV2 is smaller than the first level LV1. In this case, the controller 150 determines the control quantity DF such that the amount of warp is the first warp value DF1.

For example, when the strength of the ultrasonic waves received by the ultrasonic wave receiver 222b is at least a third level LV3 and less than the second level LV2, the controller 150 determines the thickness of the sheet R to be within a range of thickness equivalent to thick paper. The third level LV3 is smaller than the second level LV2. In this case, the controller 150 determines the control quantity DF such that the amount of warp is the third warp value DF3.

For example, when the strength of the ultrasonic waves received by the ultrasonic wave receiver 222b is less than the third level LV3, the controller 150 determines that multiple sheets R are being fed while stacked together.

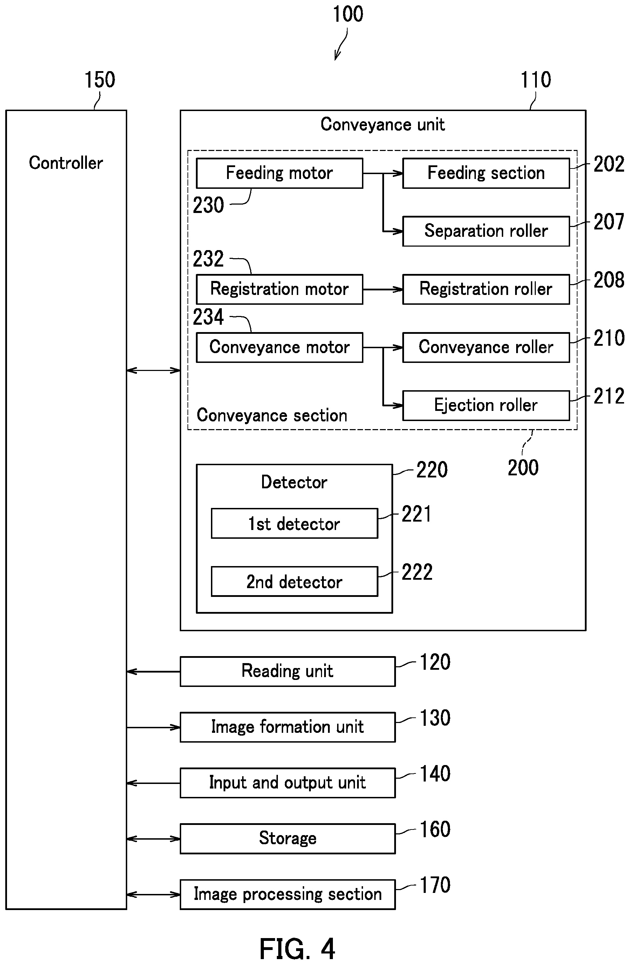

Next, the image forming apparatus 100 is described with reference to FIG. 4. FIG. 4 is a block diagram illustrating the image forming apparatus 100.

In the image forming apparatus 100 as illustrated in FIG. 4, the controller 150 controls the conveyance unit 110, the reading unit 120, the image formation unit 130, the input and output unit 140, the storage 160, and an image processing section 170.

Specifically, the controller 150 controls the conveyance section 200. The conveyance section 200 further includes a feeding motor 230, a registration motor 232, and a conveyance motor 234. The feeding motor 230, the registration motor 232, and the conveyance motor 234 are stepper motors in the first embodiment.

The feeding motor 230 drives the feeding section 202. That is, the feeding motor 230 drives the pickup roller 204 and the feeding rotating body 206. The feeding motor 230 also drives the separation roller 207.

The controller 150 controls the feeding motor 230 through a motor driver, thereby controlling the rotation of the feeding section 202 and the separation roller 207.

The registration motor 232 drives the registration roller 208. The controller 150 controls the registration motor 232 through the motor driver, thus controlling the rotation of the registration roller 208.

The conveyance motor 234 drives the conveyance rollers 210 and the ejection roller 212. The controller 150 controls the conveyance motor 234 through the motor driver, thus controlling the rotation of the conveyance rollers 210 and the ejection roller 212.

The image forming apparatus 100 further includes an image processing section 170. The image processing section 170 processes "image data indicating the sheet R" output by the first detector 221. In the following, the "image data indicating the sheet R" may be referred to as "image data DA".

Specifically, when the sheet R is skewed, the image processing section 170 corrects the slant of the image of the sheet R by analyzing and processing the image of the sheet R indicated by the image data DA. In the first embodiment, the image processing section 170 consists of an application-specific integrated circuit (ASIC).

The controller 150 determines whether or not to cause the registration roller 208 to perform a skew correction operation based on the result of detection by the first detector 221.

Specifically, the controller 150 determines whether or not the sheet R is skewed based on the result of detection by the first detector 221 (specifically, the first physical quantity PA1 indicating the slant of the sheet R). The controller 150 then determines whether or not to cause the registration roller 208 to perform the skew correction operation based on the result of determination as to whether or not the sheet R is skewed. That is, when determining that the sheet R is not skewed, the controller 150 determines not to cause the registration roller 208 to perform the skew correction operation. In this case, the time between the start of feeding and the ejection of the sheet R can be shortened because the skew correction operation is not performed. When determining that the sheet R is skewed by contrast, the controller 150 determines to cause the registration roller 208 to perform the skew correction operation. In this case, the skew in the sheet R can be corrected and the sheet R can be conveyed.

For example, the image processing section 170 analyzes the image of the sheet R to calculate the first physical quantity PA1 indicating the slant of the sheet R. The controller 150 then obtains the first physical quantity PA1 indicating the slant of the sheet R from the image processing section 170 and determines whether or not to cause the registration roller 208 to perform the skew correction operation based on the first physical quantity PA1.

For example, the controller 150 analyzes the image of the sheet R indicated by the image data DA output by the first detector 221 and calculates the first physical quantity PA1 indicating the slant of the sheet R. The controller 150 then determines whether or not to cause the registration roller 208 to perform the skew correction operation based on the first physical quantity PA1 indicating the slant of the sheet R.

When determining to cause the registration roller 208 to perform the skew correction operation, the controller 150 determines the control quantity DF for controlling the amount of warp in the sheet R based on the result of detection by the second detector 222.

For example, the control quantity DF is indicated in terms of the rotation amount of the feeding section 202 (specifically the feeding rotating body 206) from when the leading edge of the sheet R in a prescribed position (referred to in the following as a "prescribed position PS") starts to advance. As the rotation amount of the feeding section 202 indicated by the control quantity DF increases, the amount of warp in the sheet R in contact with the registration roller 208 increases. The rotation amount of the feeding section 202 is indicated by a step count of the feeding motor 230, for example.

For another example, the control quantity DF is indicated in terms of a drive time of the feeding section 202 (specifically the feeding rotating body 206) from when the leading edge of the sheet R in the prescribed position PS starts to advance. As the drive time of the feeding section 202 indicated by the control quantity DF increases, the amount of warp in the sheet R in contact with the registration roller 208 increases.

In the first embodiment, the prescribed position PS is the position of the second detector 222 in the sheet conveyance path CV.

Next, a sheet conveyance process performed by the image forming apparatus 100 is described with reference to FIGS. 4 to 6. In the following, to simplify the description, the first physical quantity PA1 indicating a slant of the sheet R is referred to as a "slant amount PA1 of the sheet R", and the second physical quantity PA2 indicating the thickness of the sheet R is referred to as a "thickness PA2 of the sheet R". To further simplify the description, a case is described in which the controller 150 has not been set such that the first detector 221 captures an image of the reverse side of the sheet R.

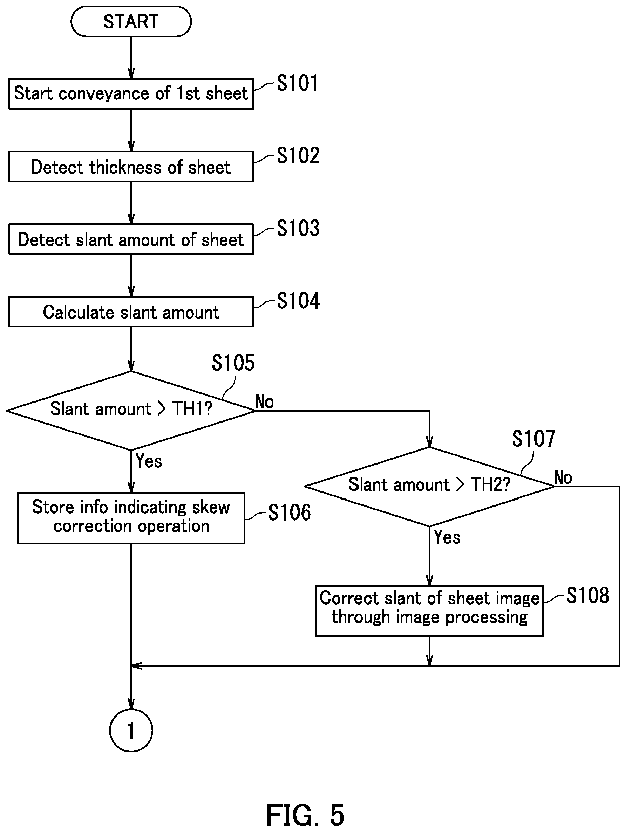

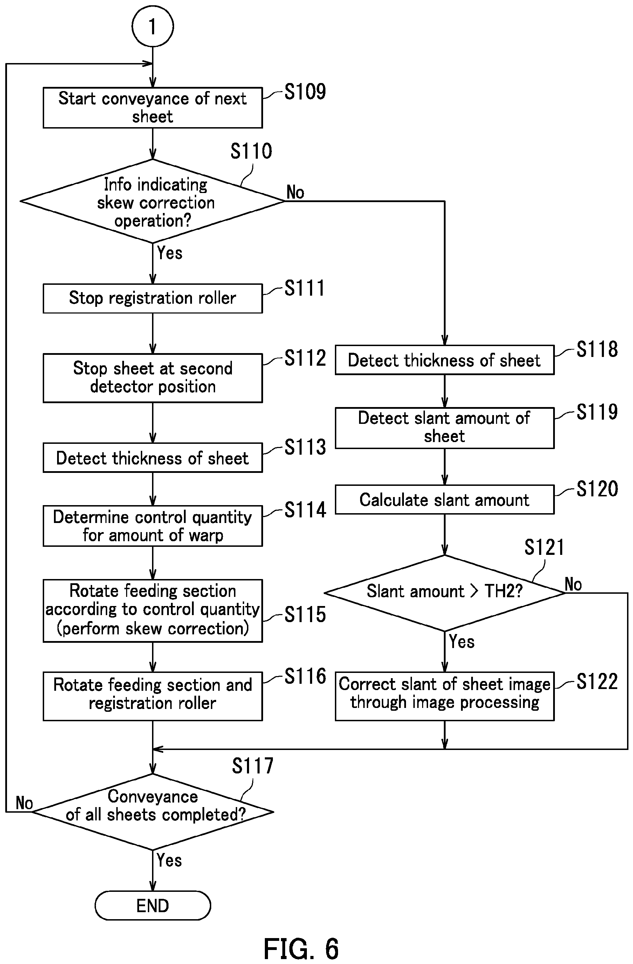

FIGS. 5 and 6 are flowcharts depicting the sheet conveyance process performed by the image forming apparatus 100. As illustrated in FIGS. 5 and 6, the sheet conveyance process includes Steps S101 to S122. The processor of the controller 150 illustrated in FIG. 4 performs the process of Steps S101 to S122 (except for Steps S108 and S122) by executing a computer program stored in the storage device of the storage 160.

In Step S101 as illustrated in FIGS. 4 and 5, the controller 150 drives the feeding motor 230, the registration motor 232, and the conveyance motor 234 to cause the feeding section 202, the separation roller 207, the registration roller 208, the conveyance rollers 210, and the ejection roller 212 to rotate so as to feed and convey the first sheet R (uppermost sheet R) loaded on the table 112.

In Step S102, a process is performed to detect the thickness PA2 of the sheet R.

That is, the second detector 222 detects the thickness PA2 of the sheet R and outputs a signal representing the thickness PA2 to the controller 150. The controller 150 receives the signal representing the thickness PA2 from the second detector 222. Specifically, the ultrasonic wave receiver 222b receives the ultrasonic waves transmitted by the ultrasonic wave transmitter 222a through the sheet R and outputs a signal representing the strength of the received ultrasonic waves to the controller 150. The controller 150 receives the signal representing the strength of the received ultrasonic waves from the ultrasonic wave receiver 222b. The signal representing the strength of the received ultrasonic waves is a signal representing the thickness PA2.

In Step S103, a process is performed to detect the slant amount PA1 of the sheet R.

That is, the first detector 221 detects the slant amount PA1 of the sheet R and outputs a signal representing the slant amount PA1 to the controller 150 or the image processing section 170. The controller 150 or the image processing section 170 receives the signal representing the slant amount PA1 from the first detector 221. Specifically, the first detector 221 captures an image of the sheet R and outputs the image data DA indicating the sheet R to the controller 150 or the image processing section 170. The image data DA indicating the sheet R is a signal representing the slant amount PA1.

In Step S104, the controller 150 or the image processing section 170 analyzes the image data DA indicating the sheet R and calculates the slant amount PA1 of the sheet R.

In Step S105, the controller 150 determines whether or not the slant amount PA1 of the sheet R is greater than a first threshold TH1. In the first embodiment, the first threshold TH1 is set to a maximum value of the slant amount PA1 up to which the slant of the image of the sheet R can be corrected through the image processing performed by the image processing section 170. For example, when the slant amount PA1 is represented by the difference CL1 or the difference CL2 (FIG. 3), the first threshold TH1 is 2 mm.

When the slant amount PA1 is determined to be greater than the first threshold TH1 (Yes) in Step S105, the process advances to Step S106.

In Step S106, the controller 150 controls the storage 160 so as to store information (referred to in the following as "information RS") indicating that the skew correction operation is to be performed by the registration roller 208 starting with the next sheet R. As a result, the storage 160 stores the information RS. The process then advances to Step S109 in FIG. 6.

When the slant amount PA1 is determined not to be greater than the first threshold TH1 (No) in Step S105 by contrast, the process advances to Step S107.

In Step S107, the controller 150 determines whether or not the slant amount PA1 of the sheet R is greater than a second threshold TH2. The second threshold TH2 is smaller than the first threshold TH1. In the first embodiment, the second threshold TH2 is set to the maximum value of a tolerable range of the slant amount PA1 established by the specifications of the image forming apparatus 100. For example, when the slant amount PA1 is represented by the difference CL1 or the difference CL2 (FIG. 3), the second threshold TH2 is 1 mm.

When the slant amount PA1 is determined not to be greater than the second threshold TH2 (No) in Step S107, the process advances to Step S109 in FIG. 6.

When the slant amount PA1 is determined to be greater than the second threshold TH2 (Yes) in Step S107 by contrast, the process advances to Step S108.

In Step S108, the controller 150 controls the image processing section 170 so as to process the image of the sheet R indicated by the image data DA and correct the slant of the image of the sheet R. As a result, the image processing section 170 processes the image of the sheet R and corrects the slant of the image of the sheet R. The process then advances to Step S109 in FIG. 6.

In Step S109 as depicted in FIG. 6, the controller 150 drives the feeding motor 230, the registration motor 232, and the conveyance motor 234 to cause the feeding section 202, the separation roller 207, the registration roller 208, the conveyance rollers 210, and the ejection roller 212 to rotate so as to feed and convey the next sheet R loaded on the table 112.

In Step S110, the controller 150 determines whether or not the information RS indicating that the skew correction operation is to be performed is stored in the storage 160.

When the information RS is determined to be stored (Yes) in Step S110, the process advances to Step S111.

In Step S111, the controller 150 controls the registration motor 232 so as to stop the rotation of the registration motor 232. As a result, the rotation of the registration roller 208 stops.

In Step S112, the controller 150 controls the feeding motor 230 such that the feeding section 202 stops the sheet R when the leading edge of the sheet R in the sheet conveyance direction D1 reaches the position of the second detector 222. As a result, the feeding section 202 stops the sheet R when the leading edge of the sheet R reaches the position of the second detector 222. In this case, the rotation of the feeding section 202 also stops.

In Step S113, a process is performed to detect the thickness PA2 of the sheet R. Specifically, the process of Step S113 is the same as the process of Step S102 in FIG. 5.

In Step S114, the controller 150 determines, based on the thickness PA2 of the sheet R, the control quantity DF for controlling the amount of warp in the sheet R when the leading edge of the sheet R makes contact with the registration roller 208.

In Step S115, the controller 150 controls the feeding motor 230 such that the feeding section 202 rotates only by the rotation amount indicated by the control quantity DF or for the drive time indicated by the control quantity DF. Accordingly, the feeding section 202 rotates only by the rotation amount indicated by the control quantity DF or for the drive time indicated by the control quantity DF, and then stops. As a result, the leading edge of the sheet R makes contact with the registration roller 208 and the skew in the sheet R is corrected by warping the sheet R.

In Step S116, the controller 150 controls the feeding motor 230 and the registration motor 232 such that the feeding section 202 and the registration roller 208 rotate. As a result, conveyance of a skew-corrected sheet R is started.

When the information RS is determined not to be stored (No) in Step S110 by contrast, the process advances to Step S118.

In Step S118, a process is performed to detect the thickness PA2 of the sheet R. Specifically, the process of Step S118 is the same as the process of Step S102 in FIG. 5.

In Step S119, a process is performed to detect the slant amount PA1 of the sheet R. Specifically, the process of Step S119 is the same as the process of Step S103 in FIG. 5.

In Step S120, the controller 150 or the image processing section 170 analyzes the image data DA indicating the sheet R and calculates the slant amount PA1 of the sheet R.

In Step S121, the controller 150 determines whether or not the slant amount PA1 of the sheet R is greater than the second threshold TH2.

When the slant amount PA1 is determined not to be greater than the second threshold TH2 (No) in Step S121, the process advances to Step S117.

When the slant amount PA1 is determined to be greater than the second threshold TH2 (Yes) in Step S121 by contrast, the process advances to Step S122.

In Step S122, the controller 150 controls the image processing section 170 so as to process the image of the sheet R indicated by the image data DA and correct the slant of the image of the sheet R. As a result, the image processing section 170 processes the image of the sheet R and corrects the slant of the image of the sheet R. The process then advances to Step S117.

After Step S116, after a negative determination (No) is made in Step S121, or after Step S122, the controller 150 determines whether or not conveyance of all sheets R loaded on the table 112 is completed in Step 117.

When it is determined that the conveyance of all of the sheets R is not completed (No) in Step S117, the process returns to Step S109.

When it is determined that the conveyance of all of the sheets R is completed (Yes) in Step S117 by contrast, the process ends.

According to the first embodiment as described above with reference to FIGS. 5 and 6, the skew correction operation (Steps S111 to S115) is performed by the registration roller 208 only when the controller 150 determines that an operation to correct a skew in the sheet R is to be performed. As a result, the image forming apparatus 100 can shorten the time between the start of feeding and the ejection of the sheet R while correcting a skew in the sheet R.

Note that after Step S106 and before Step S109, the controller 150 may determine the control quantity DF for controlling the amount of warp in the sheet R based on the thickness PA2 of the sheet R detected in Step S102 and store the control quantity DF in the storage 160. Then, Step S114 may be omitted and the controller 150 may control the feeding motor 230 such that the feeding section 202 rotates only by the rotation amount indicated by the control quantity DF stored in the storage 160 or for the drive time indicated by the control quantity DF stored in the storage 160.

### (Second Embodiment)

The following describes the image forming apparatus 100 according to a second embodiment of the present disclosure with reference to FIGS. 4, 7, and 8. The second embodiment differs from the first embodiment mainly in that the image forming apparatus 100 according to the second embodiment determines whether or not the skew correction operation is to be performed based on a result of detection by the second detector 222. The following mainly describes points of difference between the second embodiment and the first embodiment.

In the second embodiment, the physical quantity PA associated with the skew in the sheet R includes a second physical quantity PA2. The second physical quantity PA2 is a quantity indicating the thickness of the sheet R. For example, as the thickness of the sheet R decreases, the sheet R is more likely to be skewed. Accordingly, the thickness of the sheet R is an index which estimates the possibility of a skew in the sheet R. Therefore, as illustrated in FIG. 4, the detector 220 includes the second detector 222. The second detector 222 detects the second physical quantity PA2 indicating the thickness of the sheet R.

The controller 150 then determines, based on the second physical quantity PA2 indicating the thickness of the sheet R, whether or not the rotation of the registration roller 208 is to be stopped to perform an operation to correct a skew in the sheet R. That is, the controller 150 determines, based on the result of detection by the second detector 222, whether or not the rotation of the registration roller 208 is to be stopped to perform an operation to correct a skew in the sheet R.

Therefore, according to the second embodiment, the controller 150 can determine whether or not the sheet R is likely to be skewed based on the result of detection by the second detector 222, and can determine to cause the registration roller 208 to perform the skew correction operation with only when the sheet R is likely to be skewed. As a result, the image forming apparatus 100 can shorten the time between the start of feeding and the ejection of the sheet R while correcting the skew in the sheet R.

Next, the sheet conveyance process performed by the image forming apparatus 100 is described with reference to FIGS. 4, 7, and 8. To simplify the following description, the second physical quantity PA2 indicating the thickness of the sheet R is referred to as a "thickness PA2 of the sheet R". To further simplify the description, a case is described in which the controller 150 has not been set such that the first detector 221 captures an image of the reverse side of the sheet R.

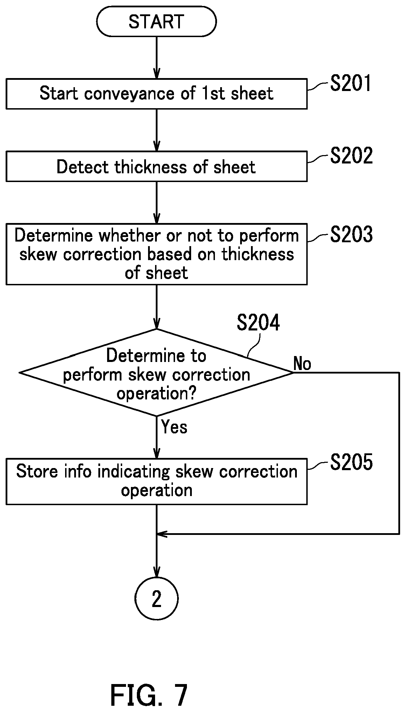

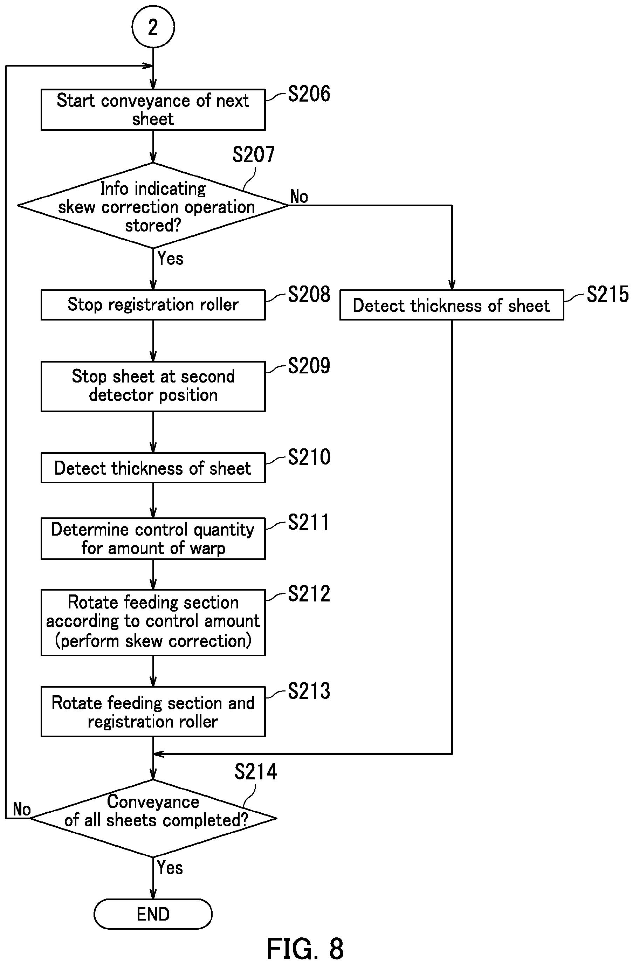

FIGS. 7 and 8 are flowcharts depicting the sheet conveyance process performed by the image forming apparatus 100 according to the second embodiment. As depicted in FIGS. 7 and 8, the sheet conveyance process includes Steps S201 to S215. The processor of the controller 150 depicted in FIG. 4 performs the process of Steps S201 to S215 by executing a computer program stored in the storage device of the storage 160.

In Step S201 as illustrated in FIGS. 4 and 7, the controller 150 drives the feeding motor 230, the registration motor 232, and the conveyance motor 234 to cause the feeding section 202, the separation roller 207, the registration roller 208, the conveyance rollers 210, and the ejection roller 212 to rotate so as to feed and convey the first sheet R (uppermost sheet R) loaded on the table 112.

In Step S202, a process is performed to detect the thickness PA2 of the sheet R. The process of Step S202 is the same as the process of Step S102 in FIG. 5.

In Step S203, the controller 150 determines whether or not to cause the registration roller 208 to perform the skew correction operation based on the thickness PA2 of the sheet R.

For example, when determining that the thickness PA2 of the sheet R is within the range of the thickness equivalent to thin paper, the controller 150 determines to cause the registration roller 208 to perform the skew correction operation with.

For example, when determining that the thickness PA2 of the sheet R is within the range of a thickness equivalent to plain paper or that the thickness PA2 of the sheet R is within the range of a thickness equivalent to thick paper, the controller 150 determines not to cause the registration roller 208 to perform the skew correction operation.

When it is determined that the skew correction operation is not to be performed by the registration roller 208 (No in Step S204), the process proceeds to Step S206 in FIG. 8.

When it is determined that the skew correction operation is to be performed by the registration roller 208 (Yes in Step S204) by contrast, the process advances to Step S205.

In Step S205, the controller 150 controls the storage 160 so as to store the information RS indicating that the skew correction operation is to be performed by the registration roller 208 starting with the next sheet R. As a result, the storage 160 stores the information RS. The process then advances to Step S206 in FIG. 8.

In Step S206 as depicted in FIG. 8, the controller 150 drives the feeding motor 230, the registration motor 232, and the conveyance motor 234 to cause the feeding section 202, the separation roller 207, the registration roller 208, the conveyance rollers 210, and the ejection roller 212 to rotate so as to feed and convey the next sheet R placed on the table 112.

In Step S207, the controller 150 determines whether or not the information RS indicating that the skew correction operation is to be performed is stored in the storage 160.

When the information RS is determined to be stored (Yes) in Step S207, the process advances to Step S208.

In Step S208, the controller 150 controls the registration motor 232 such that the rotation of the registration motor 232 stops. As a result, the rotation of the registration roller 208 stops.

In Step S209, the controller 150 controls the feeding motor 230 such that the feeding section 202 stops the sheet R when the leading edge of the sheet R in the sheet conveyance direction D1 reaches the position of the second detector 222. As a result, the feeding section 202 stops the sheet R when the leading edge of the sheet R reaches the position of the second detector 222. In this case, the rotation of the feeding section 202 also stops.

In Step S210, a process is performed to detect the thickness PA2 of the sheet R. Specifically, the process of Step S210 is the same as the process of Step S102 in FIG. 5.

In Step S211, the controller 150 determines, based on the thickness PA2 of the sheet R, the control quantity DF for controlling the amount of warp in the sheet R when the leading edge of the sheet R makes contact with the registration roller 208.

In Step S212, the controller 150 controls the feeding motor 230 such that the feeding section 202 rotates only by the rotation amount indicated by the control quantity DF or for the drive time indicated by the control quantity DF. Accordingly, the feeding section 202 rotates only by the rotation amount indicated by the control quantity DF or for the drive time indicated by the control quantity DF, and then stops. As a result, the leading edge of the sheet R makes contact with the registration roller 208 and the skew in the sheet R is corrected by warping the sheet R.

In Step S213, the controller 150 controls the feeding motor 230 and the registration motor 232 such that the feeding section 202 and the registration roller 208 rotate. As a result, conveyance of a skew-corrected sheet R is started.

When the information RS is determined not to be stored (No) in Step S207 by contrast, the process advances to Step S215.

In Step S215, a process is performed to detect the thickness PA2 of the sheet R. Specifically, the process of Step S215 is the same as the process in Step S102 in FIG. 5.

After Step S213 or after Step S215, the controller 150 determines whether or not the conveyance of all sheets R loaded on the table 112 is completed in Step S214.

When it is determined that the conveyance of all of the sheets R is not completed (No) in Step S214, the process advances to Step S206.

When it is determined that the conveyance of all of the sheets R is completed (Yes) in Step S214 by contrast, the process ends.

According to the second embodiment as described above with reference to FIGS. 7 and 8, the skew correction operation (Steps S208 to S212) is performed by the registration roller 208 only when the controller 150 determines that an operation to correct a skew in the sheet R is to be performed. As a result, the image forming apparatus 100 can shorten the time between the start of feeding and the ejection of the sheet R while correcting the skew in the sheet R.

Note that after Step S205 and before Step S206, the controller 150 may determine the control quantity DF for controlling the amount of warp in the sheet R based on the thickness PA2 of the sheet R detected in Step S202 and store the control quantity DF in the storage 160. Then, Step S211 may be omitted and the controller 150 may control the feeding motor 230 such that the feeding section 202 rotates only by the rotation amount indicated by the control quantity DF stored in the storage 160 or for the drive time indicated by the control quantity DF stored in the storage 160 in Step S212.

Embodiments of the present disclosure are described above with reference to the accompanying drawings. However, the present disclosure is not limited to the above embodiments and may be implemented in various manners within a scope not departing from the gist thereof. Furthermore, elements of configuration disclosed in the above embodiments may be appropriately altered. For example, elements of configuration among the entirety thereof illustrated in an embodiment may be added to elements of configuration of another embodiment, or some elements of configuration among the entirety thereof illustrated in the embodiments may be removed from the embodiments.

In addition, the drawings mainly illustrate the elements of configuration schematically to facilitate understanding of the disclosure. Aspects such as thickness, length, number, and interval of the elements of configuration illustrated in the drawings may differ in practice for the sake of convenience for drawing preparation. Furthermore, the configuration of each element of configuration illustrated in the above embodiments is one example and not a particular limitation. It need not be stated that the elements of configuration may be variously altered within a scope not substantially departing from the effects of the present disclosure.
(1) In the first and second embodiments described with reference to FIGS. 1 to 8, the present disclosure is applied to the registration roller 208 of the conveyance unit 110, which is an automatic document feeder as an example. However, the application target of the present disclosure is not particularly limited as long as it is an apparatus requiring a skew in a sheet to be corrected.
   For example, the present disclosure may be applied to the registration roller 134b of the image formation unit 130. In this case, a detector identical to the detector 220 is disposed in the image formation unit 130. Furthermore, in this case, the recording medium P is equivalent to an example of a "sheet".
   In addition, the sheet which is conveyed by the "conveyor device" of the present disclosure is not limited to a document or a recording medium as long as it is liable to be skewed during conveyance. For example, the sheet conveyed by the "conveyor device" may be a banknote. In this case, examples of the "conveyor device" of the present disclosure include an automatic teller machine (ATM) and a bill counter. As such, the "conveyor device" of the present disclosure is not limited to the image forming apparatus 100 as long as it conveys a sheet. For example, the sheet conveyed by the "conveyor device" may be a ticket.
(2) In the first and second embodiments described with reference to FIGS. 1 to 8, a multifunction peripheral is described as an example of the image forming apparatus 100. However, the image forming apparatus 100 is not limited to a multifunction peripheral, and may have at least one of functions such as a copy function, a printer function, a scanner function, and a facsimile machine function. In addition, the image forming apparatus 100 is not limited to an electrographic image forming apparatus, and may be an inkjet image forming apparatus.

## Claims

1. A conveyor device (100) comprising:
a conveyance section (134) which includes a registration roller (208) and is configured to convey a sheet;
a detector (220) configured to detect a physical quantity associated with a skew in the sheet; and
a controller (150) configured to control the conveyance section, wherein
the controller determines, based on a result of detection by the detector, whether or not rotation of the registration roller is to be stopped to perform an operation to correct the skew in the sheet.

2. The conveyor device according to claim 1, wherein
the physical quantity associated with the skew in the sheet is a quantity indicating a slant of the sheet with respect to a conveyance direction of the sheet,
the detector includes a first detector (221) which detects the physical quantity indicating the slant of the sheet, and
the controller determines, based on a result of detection by the first detector, whether or not the rotation of the registration roller is to be stopped to perform the operation to correct the skew in the sheet.

3. The conveyor device according to claim 1, wherein
the physical quantity associated with the skew in the sheet is an amount indicating a thickness of the sheet,
the detector includes a second detector (222) which detects the physical quantity indicating the thickness of the sheet, and
the controller determines, based on a result of detection by the second detector, whether or not the rotation of the registration roller is to be stopped to perform the operation to correct the skew in the sheet.

4. The conveyor device according to claim 1, wherein
the physical quantity associated with the skew in the sheet includes a first physical quantity and a second physical quantity,
the first physical quantity is an amount indicating a slant of the sheet with respect to a conveyance direction of the sheet,
the second physical quantity is a quantity indicating a thickness of the sheet, the detector includes:
a first detector which detects the first physical quantity indicating the slant of the sheet; and
a second detector which detects the second physical quantity indicating the thickness of the sheet, and
the controller:
determines, based on a result of detection by the first detector, whether or not the rotation of the registration roller is to be stopped to perform the operation to correct the skew in the sheet, and
determines, when determining that the operation to correct the skew in the sheet is to be performed, based on a result of detection by the second detector, a control quantity for controlling an amount of warp in the sheet when a leading edge of the sheet makes contact with the stopped registration roller.

5. The conveyor device according to claims 2 or 4, wherein
the first detector is an image sensor which captures an image of the sheet.

6. The conveyor device according to claims 3 or 4, wherein
the second detector is a multiple sheet feed sensor which detects multiple sheets fed while stacked together.

7. The conveyor device according to any one of claims 1 to 6, further comprising
an image forming section (136) configured to form an image on the sheet.
